# EUROPEAN PATENT APPLICATION

(11) **EP 1 447 678 A1**
(43) Date of publication of application: **18.08.2004**
(21) Application number: 03290369.2
(22) Date of filing: 15.02.2003
(51) Int. Cl.: G01S 1/02

(54) **A method of determining a quality measure of a position measurement method for a cellular telecommunication network**

(71) Applicant: ALCATEL, 75008 Paris (FR)
(72) Inventor: Köhler, Günter, 73230 Kirchheim (DE); Nikolai, Dirk, 70439 Stuttgart (DE)
(74) Representative: Richardt, Markus Albert

(57) **Abstract**

The present invention relates to a method of determining a quality measure of a position measurement method for a cellular telecommunication network, the method comprising the steps of:
- identification of a first measurement area having at least a predefined number of neighbouring first cells, the first measurement area belonging to a selected class of measurement areas,
- defining of first sub-areas in the first measurement area by applying a predefined grid on the first measurement area,
- performing position measurements by means of the position measurement method in at least a sub-set of the first sub-areas,
- determining of measurement errors for the position measurements,
- determining of the quality measure based on the measurement errors.

## Description

### Field of the invention

The present invention relates to the field of wireless location-finding methods, and more particularly without limitation, to methods of determining the position of a mobile station in a cellular wireless telecommunication network.

### Background and prior art

Mobile location finding is to determine the position of a mobile station or user equipment in a cellular wireless telecommunication network. In addition to the emergency subscriber safety services, wireless location information can be used for location-sensitive billing, intelligent transport system, resource management and performance enhancement in mobile cellular networks, to name just a few applications.

Various wireless location-finding technologies are known from the prior art, such as network-based techniques, handset-based techniques, hybrid techniques involving both the network and the handsets, and other location techniques.

Network-based techniques include cell ID, RF finger printing, absolute timing measurements, time difference of arrival (TDOA), angle of arrival (AOA) and TDOA/AOA or other hybrid techniques.

Handset-based techniques include GPS and assisted (A)-GPS techniques. Hybrid solutions include enhanced observed time difference (EOTD).

It is known from the prior art, that the accuracy of a position measurement depends on the location measurement method and in particular the location of the measurement:

The most basic position measurement method for cellular networks is cell ID, by which an operator can locate the cell in which a phone is being used. This is not particularly accurate as cells vary in size from several square kilometres across to just a few hundred square metres. Greater precision is possible using AOA or TDOA methods. AOA calculates the angle of a signal as it arrives at two base stations. TDOA measures the time difference of the same signal arriving at three separate base stations.

GPS positioning is limited to enhanced phone models as it relies on Global Positioning System (GPS)-enablement of the actual handset. It requires supplementary assistance data known as Assisted (A)-GPS, to enable fast time-to-fix and in-building coverage.

As regards TDOA and cell-ID it is known that TDOA is not very sensitive to antenna density whereas cell-ID depends strongly on density ("International Symposium on Location Based Services for Cellular Users - LOCELLUS 2002", München, 10/11 April 2002, "A New Method for Performance Analysis of Cellular Positioning for LBS and Navigations", A. Geiger et.al., ETH-Hoenggerberg, Zurich, Switzerland).

Further the location measurement error for TDOA and TOA has been investigated:

"Non-line-of-sight error mitigation in TDOA mobile location" ,Cong, L.,Weihua Zhuang, Global Telecommunications Conference, 2001. GLOBECOM '01. IEEE Pages:680-684 vol.1 2001; "Comparisons of error characteristics between TOA and TDOA positioning", Dong-Ho Shin,Tae-Kyung Sung, Aerospace and Electronic Systems, IEEE Transactions on Pages:307-311 Jan 2002.

The various position measurement methods which are known from the prior art perform very differently depending on the actual measurement scenario. This is why to-date there is no means for performing an objective comparison of position measurement methods in cellular telecommunication networks.

### Summary of the invention

The present invention provides for a method of determining a quality measure of a position measurement method for a cellular telecommunication network. This enables to objectively compare various position measurement methods and equipment based on any wireless location-finding technology.

In accordance with a preferred embodiment of the invention, at least two different measurement areas are identified in the network for the evaluation of the performance of a given position measurement method or equipment in a given cellular telecommunication network. For example, one of the measurement areas is a rural area, whereas the other measurement area is a populated metropolitan area with a high density of transceiver stations. In addition one or more measurement areas can be defined for regions having transceiver station densities between the extremes of the rural area and the metropolitan area. The determination of the measurement areas is performed based on cell size. A region having a low transceiver station density is characterised by large cells, whereas a region having a high transceiver station density has a much smaller cell size.

The measurement areas are divided into sub-areas by applying a predefined grid. The predefined grid is not correlated to the cell structure.

Position measurements are then performed in at least a sub-set of the sub-areas of the measurement areas. The results of the position measurements are compared to reference data for determining the accuracy of the position measurements. The measurement errors provided by the comparison to the reference position data are used as a basis for determining an objective quality measure. For example the measurement errors can be averaged for each of the measurement areas to provide a quality measure per measurement area. Alternatively or in addition an overall quality measure can be calculated, for example by averaging of all of the measurement errors or by calculating a weighted average.

In accordance with a preferred embodiment of the invention position measurements are performed within at least a predefined fraction or percentage of the sub-areas in each one of the measurement areas. The sub-set of the sub-areas in which position measurements are performed can be selected randomly. Another possibility to select the sub-areas for the position measurements is based on practical considerations, such as accessibility of a given sub-area. If a relatively high percentage, such as 60% of the sub-areas in a given measurement area needs to be selected, this still ensures that enough measurements are performed to guarantee an objective result. In addition a weather condition can be specified for the performance of the measurements.

Further, it can be specified that the measurements are to be performed at a number of various weather conditions, whereby all of the various weather conditions are also specified.

In accordance with a further preferred embodiment of the invention the position measurements are performed along a measurement route. For example, the position measurements are performed at equidistant time intervals while travelling along the measurement route.

Preferably the measurement route is split into measurement route segments which are evenly distributed within the measurement area and which are in average roughly orthogonal. In accordance with a further preferred embodiment of the invention, the measurements along the measurement route are performed on the basis of a speed profile. This is to ensure that the position measurements are performed at all relevant speeds, such as when driving slowly in a residential area, driving in the city centre and driving on a motorway.

in accordance with a further preferred embodiment of the invention measurement categories are defined, such as categories for indoor and outdoor measurements as well as for measurements in a car. In this instance it is preferred that the minimum number of measurements to be performed is made dependent on the category of the measurement.

In order to facilitate the planning of the position measurements the databases provided by a network planning tool, such as a radio network planning (RNP) or a radio network optimisation (RNO) tool can be utilised. Such tools as Evolium tool chain of Alcatel (http://www.alcatel.com/products/productsummary.jhtml;jsessionid=1GA1AO5D VAMUOCTFR0HHJGYKMWHI0TNS? DARGS=/common/opq/products/include/productbrief.jhtml A& DAV=/x/opgproduct/9160.jhtml) provide cartographic and network topology data for the cellular telecommunication network. These databases can be used in order to plan precision measurements, and in particular measurement routes and measurement route segments, by means of a planning tool. Preferably this planning tool can be integrated into the same computer system as the RNP or RNO tool.

In accordance with a further preferred embodiment of the invention only a single measurement area belonging to a specific class of measurement areas is selected for determining an objective quality measure for a given position measurement method. This way the performance of the position measurement method can be compared with other position measurement methods or a similar competitive position measurement method with respect to specific environment conditions, such as transceiver density and/or other criteria.

### Brief description of the drawings

In the following preferred embodiment of the invention will be described in greater detail by making reference to the drawings in which:
- Figure 1: is illustrative of a flow chart for determining a quality measure,
- Figure 2: schematically shows a cellular network with first and second measurement areas,
- Figure 3: is a block diagram of a computer system which is used for the planning of the position measurements,
- Figure 4: shows an example for a measurement plan.

### Detailed description

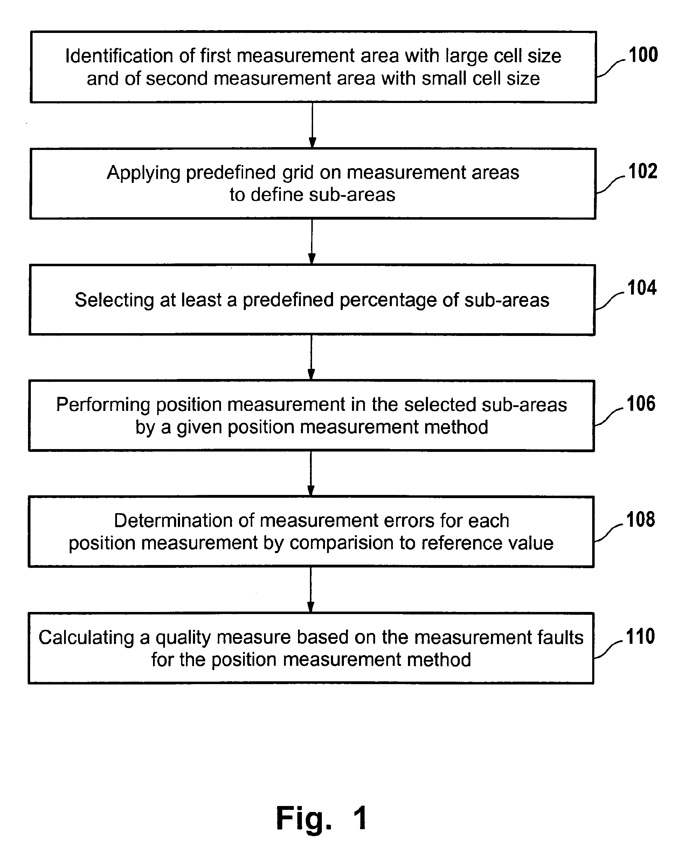

Figure 1 shows a flow chart which is illustrative of a method of determining a quality measure of a position measurement method for a cellular telecommunication network. In step 100 at least two different measurement areas are identified in the cellular telecommunication network. The first measurement area has a large cell size. Such a measurement area can be found in a rural area with a low population density.

The second measurement area has cells with a small cell size. Typically such a measurement area can be found in a metropolitan area. For example, the criterion for the first measurement area is to identify a minimum number of neighbouring cells, where each of the cells has at least a certain minimum size. Likewise the criterion for the second measurement area can be a minimum number of neighbouring cells, where each of the cells does not surpass a given maximum cell size.

In addition other measurement areas having intermediate cell sizes can be defined in order to cover a more complete spectrum of the measurement conditions.

In step 102 the measurement areas are divided into sub-areas. This is done by applying a grid on the measurement areas which is independent from the cell topology in the measurement area. For example a rectangular grid can be used for this purpose. In step 104 at least a certain predefined percentage or fraction of the sub-areas of the measurement areas is selected for performance of the position measurements. The sub-areas can be selected randomly or on the basis of another criterion. For example, sub-areas which are difficult to access are de-selected while other sub-areas being reachable by car are selected instead.

For example, an arbitrary route having at least a predefined length is planned in the measurement area. It is then checked whether the route covers at least the predefined percentage or fraction of the sub-areas of the measurement area considered. If this is not the case the route is changed and checked again. This process is repeated iteratively until the predefined percentage or fraction condition is fulfilled.

In step 106 position measurements are performed in the selected sub-areas. For example a predefined number of measurements is performed per sub-area. In step 108 the measurement errors of the position measurements are determined by comparison of the measurement results with reference values.

For example the reference values are obtained by precise position measurements by means of reference position measurement equipment.

In step 110 a quality measure is calculated based on the measurement errors. For example, a separate quality measure is calculated for each one of the measurement areas by calculating the average measurement errors within the given measurement area. Alternatively or in addition an overall quality measure is calculated, for example by calculating a weighted average of the measurement errors.

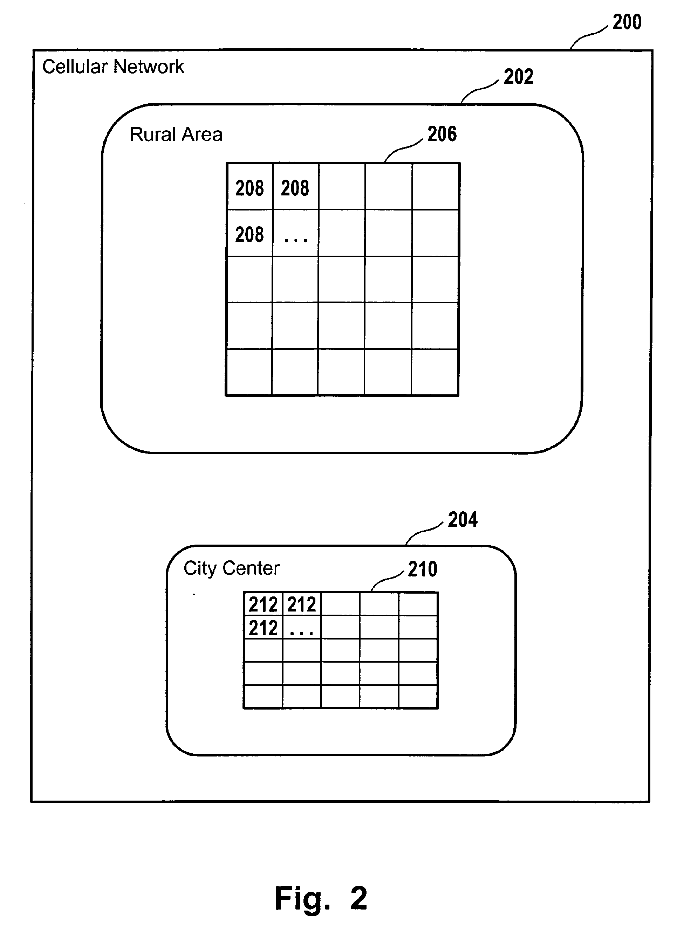

Figure 2 shows cellular network 200. Cellular network 200 covers rural area 202 and metropolitan area 204, such as the centre of a major city. Rural area 202 has large cells of for example above 10 square kilometres per cell. In contrast metropolitan area 204 has small cells of less than 0.5 square kilometres per cell.

Measurement area 206 is selected within rural area 202. Measurement area 206 covers a predefined minimum number of cells, such as eight cells. If the size of each one of the cells is above 10 square kilometres the size of measurement area 206 is above 100 square kilometres.

Measurement area 206 is divided into predefined sub-areas 208 of equal size and shape. For example measurement area 206 is divided into 100 sub-areas 208 by a 10 times 10 rectangular grid. For illustrative purposes the grid size shown in figure 2 is 5 times 5 resulting in a number of 25 sub-areas 208.

Measurement area 210 is selected within a metropolitan area 204. Again measurement area 210 covers the predefined minimum number of cells within metropolitan area 204. Measurement area 210 is divided into the same number of sub-areas as measurement area 206. Again this can be accomplished by applying a 10 times 10 or 5 times 5 rectangular grid on measurement area 210. This results in sub-areas 212 of equal size and shape which are smaller than sub-areas 208. The overall size of measurement area 210 can be roughly four square kilometres.

In addition measurement areas of intermediate size can be identified. For example the following classification can be used:

| | |
|---|---|
| Class A | > 10 km²/cell |
| Class B | up to 10 km²/cell |
| Class C | up to 2 km²/cell |
| Class D | up to 0.5 km²/cell |

This classification can be refined by means of the following categories:

| | |
|---|---|
| Category 1 | outdoor |
| Category 2 | incar |
| Category 3 | Indoor |

Combinations hereof result in several classes, e.g. A, B, C1, C2, C3, D1, D2 and D3. The total size of a measurement area depends on the dedicated class and should cover at least 8 cells. This results in measurement area sizes of approximately

| | |
|---|---|
| Class A | > 100 km² |
| Class B | 100 km² |
| Class C | 16 km² |
| Class D | 4 km² |

The shape of a measurement area should be approximately square and is further subdivided into 10 time 10 squares of equal size. A defined percentage of all 100 sub-squares has to be used for the measurement campaign, i.e. measurements have to be performed in a given number of squares. For example, 40% of the squares can be left out.

Preferably a measurement route is planned for each measurement area. For example the measurement route must be a multiple, such as 4 times of the square root of the measurement area. If the size of a measurement area is 56 km² the length of the measurement route of that measurement area is 4 * sqrt(56) = 30km. In addition a predefined number of measurements can be prescribed per sub-area.

The route segments should be evenly distributed in the measurement area and must touch at least a certain number (e.g. 60%) of the 100 sub-squares (see above).

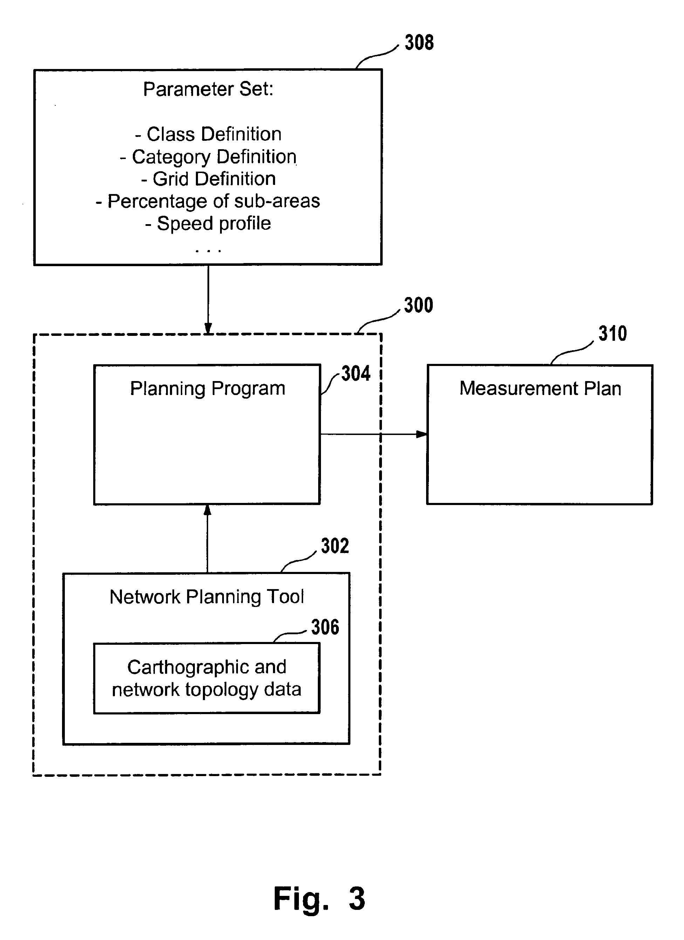

Figure 3 shows a block diagram of a computer system 300 which has a network planning tool 302 and measurement planning program 304. Network planning tool provides standard radio network and/or radio network optimisation features. For this purpose network planning tool 302 has database 306 for providing of cartographic and network topology data. Measurement planning program 304 uses database 306 for identification of measurement areas in the network and for planning of measurement routes within the measurement areas.

For this purpose measurement planning program 304 receives parameter set 308 which comprises a description of the planning task. For example the parameter set 308 contains a definition of the classes and categories of measurement areas to be identified within the network topology. Further parameter set 308 contains a definition of the grid to be used for sub-dividing the measurement areas into sub-areas. Further parameter set 308 can contain an indication of the percentage of the sub-areas in which measurements need to be performed. Further parameter set 308 can comprise an indication of a speed profile, i.e. a number of measurements to be performed at various speeds.

The specification provided by parameter set 308 is used by measurement planning program 308 to generate a measurement plan on the basis of cartographic and network topology data of database 306. The resulting measurement plan 310 contains a description of the measurement routes and the sequence of measurements to be performed while travelling along the measurement routes.

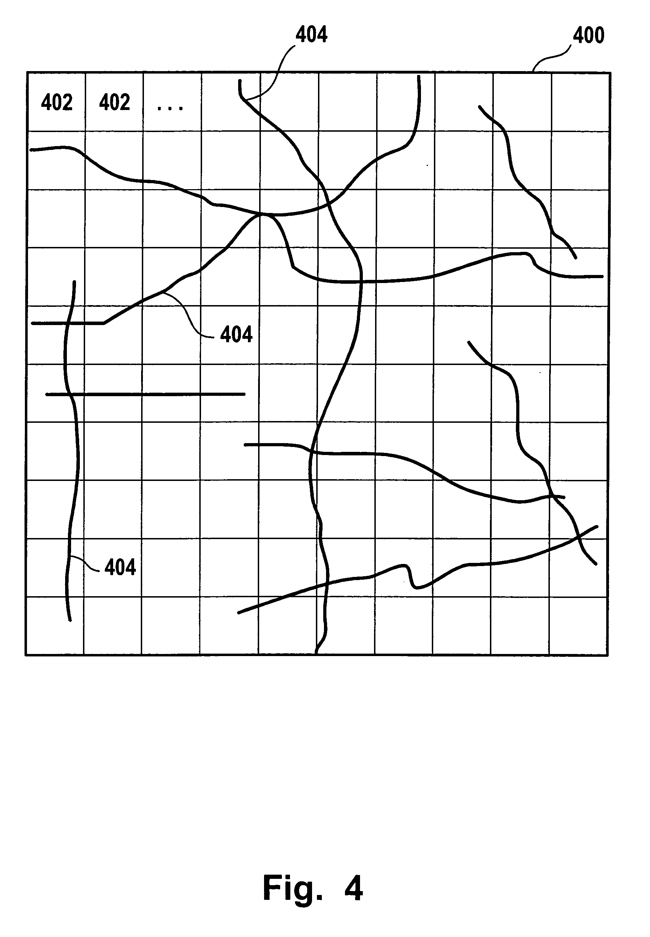

Figure 4 shows an example for the planning information provided by the measurement planning program 304 with respect to one of the measurement areas. Measurement area 400 is one of the measurement areas which has been automatically identified by measurement planning program 304 (cf. figure 3). Measurement area 400 is divided into sub-areas 402. Within measurement 400 a number of nine measurement route segments 404 have been planned. The measurement route segments are in average roughly orthogonal or parallel as the direction of movement with respect to a base station can provide varying levels of precision depending on the position measurement method.

### List of Reference Numerals

- 200: cellular network
- 202: rural area
- 204: metropolitan area
- 206: measurement area
- 208: sub-area
- 210: measurement area
- 212: sub-area
- 300: computer system
- 302: network planning tool
- 304: measurement planning program
- 306: database
- 308: parameter set
- 310: measurement plan
- 400: measurement area
- 402: sub-areas
- 404: measurement route segments

## Claims

1. A method of determining a quality measure of a position measurement method for a cellular telecommunication network, the method comprising the steps of:
- identification of a first measurement area having at least a predefined number of neighbouring first cells, the first measurement area belonging to a selected class of measurement areas,
- defining of first sub-areas in the first measurement area by applying a predefined grid on the first measurement area,
- performing position measurements by means of the position measurement method in at least a sub-set of the first sub-areas,
- determining of measurement errors for the position measurements,
- determining of the quality measure based on the measurement errors.

2. The method of claim 1, whereby the first class is defined by a minimum first size of the first cells and further comprising:
- identification of a second measurement area having at least the predefined number of neighbouring second cells, each one of the second cells having a maximum second size, whereby the second size is smaller than the first size,
- defining of second sub-areas in the second measurement area by applying a second predefined grid on the second measurement area,
- performing position measurements by means of the position measurement method in at least a sub-set of the second sub-areas.

3. The method of claim 1, further comprising selecting of at least a predefined fraction of the first and second sub-areas for the subset and performing a specified minimum number of position measurements per sub-area.

4. The method of claim 1, further comprising
- identification of at least an additional third measurement area having the predefined number of neighbouring third cells, the third cells having at least a third intermediary size between the first size and the second size,
- defining of third sub-areas in the third measurement area by applying a third predefined grid on the third measurement area,
- providing a measurement route for each one of the measurement areas, each one of the measurement routes having a length of a multiple of the square root of the respective measurement area.

5. The method of claim 4, each one of the measurement routes having measurement route segments which are about evenly distributed in the respective measurement area.

6. The method of claim 4, the position measurements being performed at equidistant points of time or distance while travelling along the measurement route.

7. The method of claim 4, further comprising providing a speed profile for performing of the position measurements when travelling along the measurement route.

8. The method of claim 1, further comprising defining a set of position measurement conditions and performing of the position measurements under all of the position measurement conditions in the measurement areas.

9. A computer program product, in particular digital storage medium, for planning of position measurements for the purpose of determining a quality measure of a position measurement method for a cellular telecommunication network (200), comprising program means for performing the steps of:
- accessing of cartographic and network topology data (306) for the cellular telecommunication network,
- identification of a first measurement area (206) having at least a predefined number of neighbouring first cells, the first cells having at least a first size, the identification being performed on the basis of the cartographic and/or network topology data,
- defining of first sub-areas (208) in the first measurement area by applying a predefined grid on the first measurement area,
- identification of a second measurement area (204) having at least the predefined number of neighbouring second cells, each one of the second cells having a maximum second size, whereby the second size is smaller than the first size, the identification being performed on the basis of the cartographic and/or network topology data,
- defining of second sub-areas (212) in the second measurement area by applying a second predefined grid on the second measurement area,
- providing a measurement plan (310) for the first and second measurement areas.

10. A computer system for planning and/or optimisation of a cellular telecommunication network, the computer system comprising:
- means (302) for providing cartographic and network topology data (306) of the cellular telecommunication network (200),
- means (304) for identification of a first measurement area (206) having at least a predefined number of neighbouring first cells, the first cells having at least a first size, the identification being performed on the basis of the cartographic and/or network topology data,
- means (304) for defining of first sub-areas in the first measurement area by applying a predefined grid on the first measurement area,
- means (304) for identification of a second measurement area having at least the predefined number of neighbouring second cells, each one of the second cells having a maximum second size, whereby the second size is smaller than the first size, the identification being performed on the basis of the cartographic and/or network topology data,
- means (304) for defining of second sub-areas in the second measurement area by applying a second predefined grid on the second measurement area,
- means (304) for providing a measurement plan (310) for the first and second measurement areas.
